# EUROPEAN PATENT APPLICATION

(11) **EP 4 840 678 A1**
(43) Date of publication of application: **18.11.2026**
(21) Application number: 25225520.3
(22) Date of filing: 19.12.2025
(51) Int. Cl.: B60L 53/30, B60L 53/67, B60L 53/68

(54) **CONTROL DEVICE, OPTIMAL TRANSMISSION METHOD AND NON-TRANSITORY COMPUTER-READABLE STORAGE MEDIUM THEREOF FOR CHARGING STATION**

(30) Priority: 13.05.2025 CN 202510609646
(71) Applicant: Lite-On Technology Corporation, Neihu, Taipei 114 (TW)
(72) Inventor: YEN, Chen-Cheng, 114 Taipei (TW)
(74) Representative: dompatent

(57) **Abstract**

An optimal transmission method for a charging station including a control device and several charging piles communicatively connected to the control device, and each charging pile charges at least one vehicle. The optimized transmission method includes the following steps. Data packets transmitted by the charging piles are analyzed to obtain a plurality of first parameters of a communication condition associated with the data packets. A plurality of second parameters of a transmission setting associated with the data packets and the control device are analyzed. A path of an optimal transmission configuration of each of the data packets is generated according to the first parameters and the second parameters. Priority scores corresponding to the data packets are calculated according to the path of the optimal transmission configuration. The data packets are sorted according to the priority scores. The sorted data packets are transmitted by the control device.

## Description

### TECHNICAL FIELD

The present disclosure relates to a control mechanism of a charging station, and more particularly relates to a control device, an optimization transmission method and a non-transitory computer-readable storage medium thereof for a charging station.

### BACKGROUND

With the development of emerging energy, various forms of electric vehicles have been widely used. In response to the charging requirements of electric vehicles, charging management systems have been gradually disposed. In the charging management system, a remote base station, several charging stations and several charging piles can communicate via an open charge point protocol (OCPP).

However, the communication transmission of the OCPP of the existing charging management system often has defects such as high network delay, low bandwidth utilization, and low transmission efficiency. Therefore, delays or errors of data transmission may occur during the charging process of the charging station for the electric vehicle.

In view of the above issues, it is necessary to provide a control mechanism for a charging station that can optimize the communication transmission of the OCPP of the charging management system, and hence improve the transmission efficiency and the connection success rate of the OCPP and the utilization efficiency of charging resources.

### SUMMARY

According to one embodiment of the present disclosure, a control device for a charging station is provided. The charging station includes a plurality of charging piles communicatively connected to the control device, and each of the charging piles charges at least one vehicle. The control device includes the following elements. A communication condition analyzing unit is configured to analyze a charging pile information contained in a plurality of data packets transmitted by the charging piles, so as to obtain a communication condition associated with the data packets, wherein the communication condition comprises a plurality of first parameters. A transmission setting analyzing unit is configured to analyze a transmission setting associated with the data packets and the control device, wherein the transmission setting comprises a plurality of second parameters. An optimal transmission calculating unit is communicatively connected to the communication condition analyzing unit and the transmission setting analyzing unit, and configured to generate a path of an optimal transmission configuration for each of the data packets according to the first parameters and the second parameters. An optimal transmission setting unit is communicatively connected to the optimal transmission calculating unit, and configured to calculate a plurality of priority scores corresponding to the data packets according to the path of the optimal transmission configuration of each of the data packets, and sort the data packets according to the priority scores. The sorted data packets are transmitted by the control device.

According to another embodiment of the present disclosure, an optimal transmission method for a charging station is provided. The charging station includes a control device and a plurality of charging piles communicatively connected to the control device, and each of the charging piles charges at least one vehicle. The optimal transmission method includes the following steps. Analyzing a charging pile information contained in a plurality of data packets transmitted by the charging piles to obtain a communication condition associated with the data packets, wherein the communication condition comprises a plurality of first parameters. Analyzing each of the data packets and a transmission setting associated with the control device, wherein the transmission setting comprises a plurality of second parameters. Generating a path of an optimal transmission configuration for each of the data packets according to the first parameters and the second parameters. Calculating a plurality of priority scores corresponding to the data packets according to the path of the optimal transmission configuration of each of the data packets. Sorting the data packets according to the priority scores. Transmitting the sorted data packets by the control device.

According to still another embodiment of the present disclosure, A non-transitory computer-readable storage medium is provided. The non-transitory computer-readable storage medium includes a plurality of instructions. The instructions cause a controller, a computing device or a computer to execute the optimal transmission method for a charging station.

### BRIEF DESCRIPTION OF THE DRAWINGS

FIG. 1A is a block diagram of a charging management system 1000a according to an embodiment of the present disclosure.
FIG. 1B is a block diagram of a charging management system 1000b according to another embodiment of the present disclosure.
FIG. 2 is a block diagram of a control device 100 according to an embodiment of the present disclosure.
FIG. 3A is a schematic diagram showing the optimal transmission calculating unit 130 calculates the optimal transmission configuration OPT of the data packet D11 of the charging pile 101.
FIG. 3B is a schematic diagram of the optimal transmission calculating unit 130 calculates the optimal transmission configuration OPT of the data packet D12 of the charging pile 102.
FIG. 3C is a schematic diagram of the optimal transmission configuration OPT of the data packet D13 of the charging pile 103 calculated by the optimal transmission calculating unit 130.
FIG. 4 is a flow chart of an optimal transmission method according to an embodiment of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

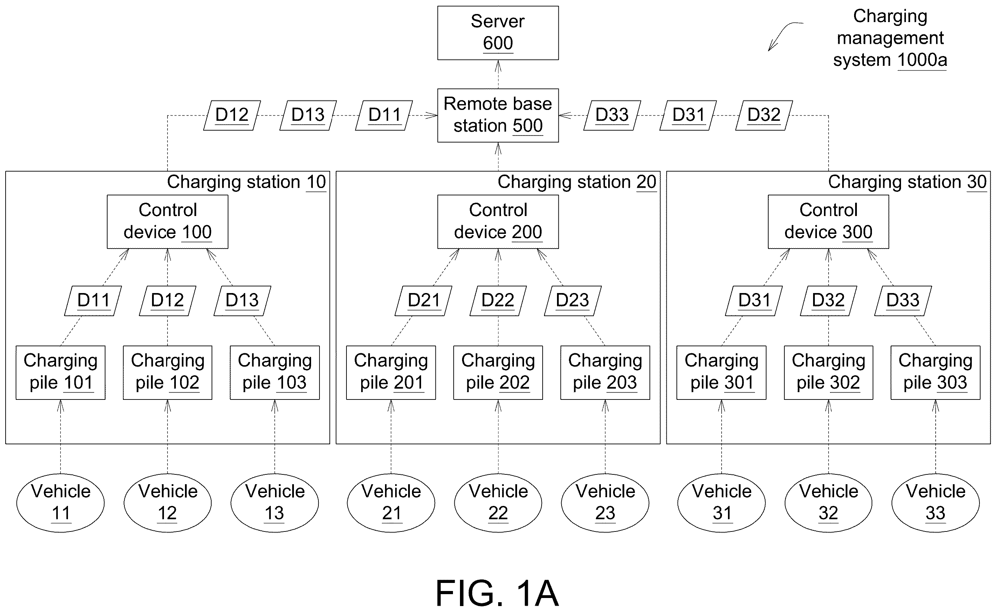

FIG. 1A is a block diagram of a charging management system 1000a according to an embodiment of the present disclosure. The charging management system 1000a at least includes a remote base station 500 and several charging stations (e.g., three charging stations 10, 20 and 30 in this embodiment); and the remote base station 500 is communicatively connected to a server 600 in the backend, so as to transmit information of the charging stations 10-30 to the server 600 in the backend through the remote base station 500. These charging stations 10-30 are each equipped with a control device and several charging piles. For example, the charging station 10 is provided with a control device 100 and three charging piles 101, 102 and 103; the charging station 20 is provided with a control device 200 and three charging piles 201, 202 and 203; and the charging station 30 is provided with a control device 300 and three charging piles 301, 302 and 303.

Specifically, in addition to being communicatively connected to the server 600 in the backend, the remote base station 500 is also communicatively connected to the control devices 100-300; and these control devices 100-300 use wired communication (such as physical network lines, etc.) or wireless communication (such as 5G, 6G, Wi-Fi, etc.) based on the open charge point protocol (OCPP) to communicate with their respective charging piles. For example, the control device 100 is communicatively connected to the charging piles 101, 102, and 103; the control device 200 is communicatively connected to the charging piles 201, 202, and 203; and the control device 300 is communicatively connected to the charging piles 301, 302, and 303.

In one embodiment, each of the charging piles 101-103, 201-203 and 301-303 can charge at least one of the corresponding vehicles 11-13, 21-23 and 31-33. In this embodiment, the charging piles 101, 102, 103, 201, 202, 203, 301, 302 and 303 may charge the vehicles 11, 12, 13, 21, 22, 23, 31, 32 and 33 respectively. In one embodiment, the vehicles 11-13, 21-23 and 31-33 may be electric vehicles.

In one embodiment, each of the control devices 100-300 receives charging pile information from the charging piles 101-103, 201-203 and 301-303 respectively, and analyzes the charging pile information. The charging piles 101-103, 201-203 and 301-303 provide the charging pile information to the control devices 100-300 via data packets. For example, in the charging station 10, the charging piles 101, 102, and 103 respectively transmit ( In other words, upload) data packets D11, D12 and D13 to the control device 100. Similarly, in the charging station 20, the charging piles 201, 202 and 203 transmit data packets D21, D22 and D23 to the control device 200, respectively; in the charging station 30, the charging piles 301, 302 and 303 transmit data packets D31, D32 and D33 to the control device 300, respectively.

The charging pile information contained in the data packets D11-D13, D21-D23 and D31-D33 of the charging piles 101-103, 201-203 and 301-303 can be analyzed to obtain their associated "a communication condition", and such a communication condition at least includes parameters: a network transmission delay D, a bandwidth utilization U, a charging station load L and a data priority P (also referred to as "first parameters"). On the other hand, each of the control devices 100-300 has a predefined "transmission setting", and the transmission setting is also related to the data packets D11-D13, D21-D23 and D31-D33 of the charging piles 101-103, 201-203 and 301-303; and the transmission setting at least includes parameters: a data packet size S, a transmission protocol C and a re-transmission interval R (also referred to as "second parameters"). Furthermore, the control devices 100-300 adjust the communication strategies of the control devices 100-300 according to the above communication condition and transmission setting.

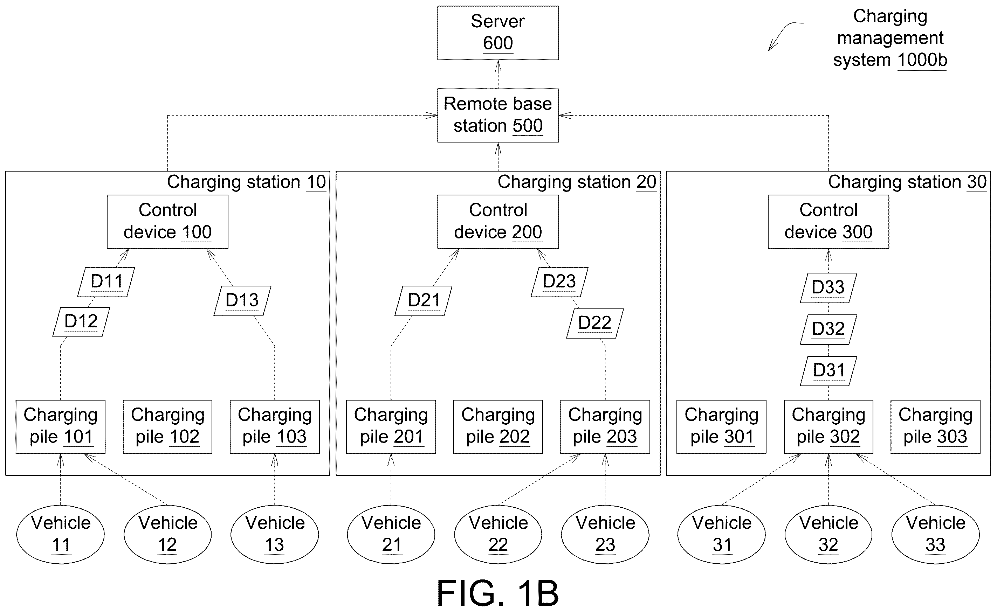

FIG. 1B is a block diagram of a charging management system 1000b according to another embodiment of the present disclosure. In this embodiment, the number of vehicles charged by the charging piles 101-103, 201-203 and 301-303 may be different. Some charging piles are temporarily idle, and the number of vehicles charged by these idle charging piles is "0". The charging pile information transmitted from the charging pile 103 to the control device 100 via the data packet D13 may contain information of the vehicle 13. Furthermore, the charging pile information transmitted from the charging pile 201 to the control device 200 via the data packet D21 may contain information of the vehicle 21.

The charging pile 101 charges two vehicles 11 and 12, the charging pile 203 charges two vehicles 22 and 23, and the charging pile 302 charges three vehicles 31, 32 and 33. Since the number of vehicles charged by the charging piles 101, 203 and 302 is greater than or equal to "2", the charging piles 101, 203 and 302 can transmit multiple data packets corresponding to the number of vehicles. For example, the charging pile 101 transmits two data packets D11 and D12, which correspond to the two vehicles 11 and 12. The charging station 203 transmits two data packets D22 and D23, which correspond to the two vehicles 22 and 23. The charging station 302 transmits three data packets D31, D32 and D33, which correspond to the three vehicles 31, 32 and 33.

On the other hand, the charging piles 102, 202, 301 and 303 are temporarily in an idle state and the number of vehicles being charged is "0". Therefore, temporarily, the charging piles 102, 202, 301 and 303 may not transmit any data packets to the corresponding control devices 100, 200 and 300.

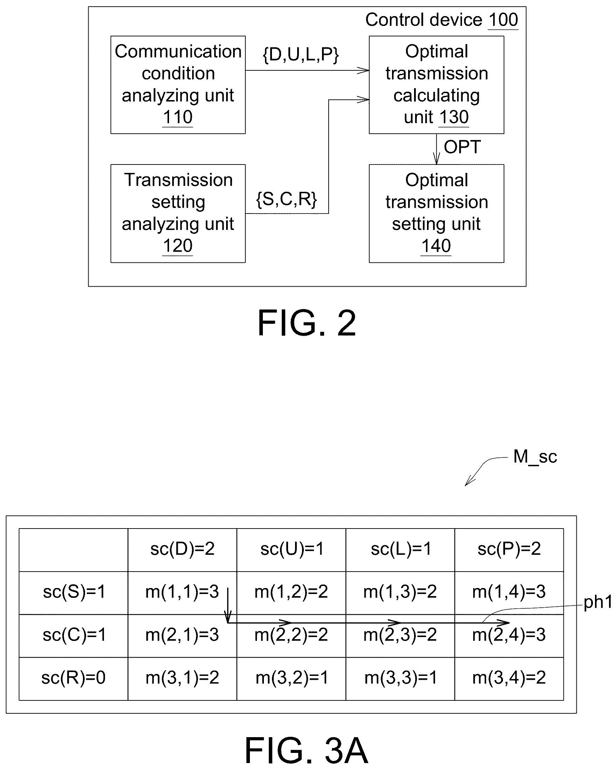

FIG. 2 is a block diagram of a control device 100 according to an embodiment of the present disclosure. (FIG. 2 only takes the control device 100 as an example; the architectures of the control devices 200 and 300 are similar to the control device 100). As shown in FIG. 2, the control device 100 includes a communication condition analyzing unit 110, a transmission setting analyzing unit 120, an optimal transmission calculating unit 130, and an optimal transmission setting unit 140. The control device 100 is, for example, a digital signal processor (DSP), a central processing unit (CPU) or a micro control unit (MCU); the communication condition analyzing unit 110, the transmission setting analyzing unit 120, the optimal transmission calculating unit 130 and the optimal transmission setting unit 140 are, for example, hardware circuit units inside the control device 100. In one embodiment, the communication condition analyzing unit 110 and the transmission setting analyzing unit 120 are communicatively connected to the optimal transmission calculating unit 130; and the optimal transmission calculating unit 130 is communicatively connected to the optimal transmission setting unit 140.

In another example, the control device 100 is implemented as a software program module. More specifically, the control device 100 realizes the overall function of the control device 100 by executing multiple instructions included in its internal software code through a hardware processor (e.g., a DSP, a CPU, or a MCU) or a hardware device (e.g., a controller, a computer device, or a computer). Furthermore, the communication condition analyzing unit 110, the transmission setting analyzing unit 120, the optimal transmission calculating unit 130 and the optimal transmission setting unit 140 inside the control device 100 are all software modules, and their respective functions are also realized by the instructions in the software code. The software code may be stored in a non-transitory computer-readable storage medium; wherein the non-transitory computer-readable storage medium may be, for example, various forms of non-transitory (non-volatile) memories, hard disk, USB flash drive, and other storage devices.

The non-transitory computer-readable storage medium is electrically connected to the hardware processor or the hardware device; alternatively, the non-transitory computer-readable storage medium is disposed in the hardware processor or the hardware device. When the hardware processor or hardware device reads the above-mentioned software code from the non-transitory computer-readable storage medium, the hardware processor or hardware device can execute the instructions in the software code to realize the respective functions of the communication condition analyzing unit 110, the transmission setting analyzing unit 120, the optimal transmission calculating unit 130 and the optimal transmission setting unit 140.

In operation, the control device 100 analyzes the communication condition associated with the data packets transmitted by the charging piles 101-103 (for example, the data packets D11-D13 in FIG. 1A), and analyzes the transmission setting associated with the control device 100 (the transmission setting are also associated with the charging piles 101-103 and the data packets D11-D13). The control device 100 generates a score matrix M_sc for each of the data packets D11-D13 according to the parameters included in the communication condition and the transmission setting, and generates a path of the optimal transmission configuration OPT for each of the data packets D11-D13 according to the score matrix M_sc. Furthermore, the control device 100 calculates the priority scores of the data packets D11-D13 according to the path of the optimal transmission configuration OPT, and then sorts the data packets D11-D13 according to the priority scores. According to the above-mentioned sorted order, the control device 100 transmits the data packets D11-D13 of the charging piles 101-103 to the remote base station 500, and the remote base station 500 further transmits the sorted data packets D11-D13 to the server 600 in the backend.

More specifically, the communication condition analyzing unit 110 of the control device 100 is used to analyze various parameters of the communication condition associated with the data packets D11-D13 of the charging piles 101-103 (including: the network transmission delay D, the bandwidth utilization U, the charging station load L and the data priority P). On the other hand, the transmission setting analyzing unit 120 of the control device 100 is used to analyze the data packets D11-D13 of the charging piles 101-103 and various parameters of the transmission setting associated with the control device 100 (including: the data packet size S, the transmission protocol C and the re-transmission interval R). Specific definitions of parameters of the communication condition and transmission setting are shown in Table 1 and Table 2.

**Table 1**

| Communication condition | | | | |
|---|---|---|---|---|
| network transmission delay D | delay time of the data packet | 1s | 10s~30s | >60s |
| | level | low | medium | high |
| | score sc(D) | 2 | 1 | 0 |
| bandwidth utilization U | ratio of the used bandwidth to the available bandwidth | <20% | 20%~50% | 51%~99% |
| | level | low | medium | high |
| | score sc(U) | 2 | 1 | 0 |
| charging station load L | ratio of the number of vehicles being charged to the predefined number of vehicles | <20% | 20%~50% | 51%~99% |
| | level | Low | Medium | high |
| | score sc(L) | 2 | 1 | 0 |
| data priority P | priority level of the data packet | Tire3 | Tire2 | Tire1 |
| | level | Low | Medium | high |
| | score sc(P) | 0 | 1 | 2 |

Please refer to Table 1, and take the charging pile 101 in the charging station 10 of FIG. 1A as an example, so as to explain the definitions of various parameters of the communication condition. The network transmission delay D is defined as: the delay time of the data packet D11 transmitted by the charging pile 101. Different values of the network transmission delay D correspond to different levels and different scores sc(D). A longer network transmission delay D corresponds to a higher level and a lower score sc(D). For example, if the network transmission delay D is 1 second, it corresponds to the level "low" and the score sc(D) of "2"; if the network transmission delay D is between 10 seconds and 30 seconds, it corresponds to the level "medium" and the score sc(D) of "1"; if the network transmission delay D is greater than 60 seconds, it corresponds to the level "high" and the score sc(D) of "0". A higher score sc(D) of the network transmission delay D reflects that the communication status between the charging pile 101 and the control device 100 is: a higher transmission speed and a smaller transmission delay.

The bandwidth utilization rate U is defined as: the ratio of the used bandwidth to the available bandwidth of the wired or wireless communication (based on the OCPP) between the charging pile 101 and the control device 100. A larger bandwidth utilization U corresponds to a higher level and a lower score sc(U). For example, if the bandwidth utilization U is less than 20%, it corresponds to the level "low" and the score sc(U) of "2"; if the bandwidth utilization U is between 20% and 50%, it corresponds to the level "medium" and the score sc(U) of "1"; if the bandwidth utilization U is between 51% and 99%, it corresponds to the level "high" and the score sc(U) of "0". A higher score sc(U) of the bandwidth utilization U reflects that the communication status between the charging pile 101 and the control device 100 is: a higher transmission speed and a smaller transmission delay.

The charging station load L is defined as: the ratio of the number of vehicles being charged at each charging station with respect to the predefined number of vehicles. Taking the charging station 10 of FIG. 1A as an example, the predefined number of vehicles of the charging station 10 is, for example, "10", and the number of vehicles being charged at the charging station 10 is "3", then the charging station load L of the charging station 10 is "30%". A higher charging station load L corresponds to a higher level and a lower score sc(L). For example, the charging station load L is less than 20%, which corresponds to the level "low" and the score sc(L) of "2"; the charging station load L is between 20% and 50%, which corresponds to the level "medium" and the score sc(L) of "1"; the charging station load L is between 51% and 99%, which corresponds to the level "high" and the score sc(L) of "0". A higher score sc(L) of the charging station load L reflects that the communication status between the charging pile 101 and the control device 100 is: a higher transmission speed and a smaller transmission delay.

The data priority P is defined as: the priority level of the data packet transmitted by the charging pile. A higher data priority P corresponds to a higher level and a higher score sc(P). For example, the data priority P is "Tier 3", which corresponds to the level "low" and the score sc(P) of "0"; the data priority P is "Tier 2", which corresponds to the level "medium" and the score sc(P) of "1"; the data priority P is "Tier 1", which corresponds to the level "high" and the score sc(P) of "2". In one embodiment, the content of the data packet may include relevant information of the vehicle driver (for example, the content of the data packet D11 transmitted by the charging pile 101 includes personal information or payment information of the driver of the vehicle 11), which is confidential information and therefore corresponds to a higher level of data priority P (for example, "Tier 1"). In another example, the content of the data packet includes the parameters of the vehicle itself (for example, the content of the data packet D11 includes the tire pressure of the vehicle 11), which corresponds to a lower level of data priority P (for example, "Tier 3"). A higher score sc(P) of the data priority P reflects that the communication status between the charging pile 101 and the control device 100 is: a higher transmission speed and a smaller transmission delay.

**Table 2**

| Transmission setting | | | | | |
|---|---|---|---|---|---|
| data packet size S | data volume of a single data packet | <1KB (small packet) | 1KB~10KB (medium packet) | | >10KB (large packet) |
| | level | low | medium | | high |
| | score sc(S) | 2 | 1 | | 0 |
| transmission protocol C | category of transmission protocol | TCP | | UDP | |
| | score sc(C) | 2 | | 1 | |
| re-transmission interval R | time interval for re-transmitting the data packet | 1s (short) | 5s (medium) | 10s (long) | |
| | level | low | medium | high | |
| | score sc(R) | 2 | 1 | 0 | |

Next, please refer to Table 2 and take the charging pile 101 in the charging station 10 of FIG. 1A as an example, so as to explain the definitions of various parameters of the transmission setting. The data packet size S is defined as: the data volume of the data packet D11 transmitted by the charging pile 101. A smaller data packet size S requires a shorter transmission time, and thus corresponds to a higher score sc(S) and a lower level. For example, if the data packet size S is less than 1KB (a "small packet"), it corresponds to a level of "low" and a score sc(S) of "2"; if the data packet size S is between 1KB and 10KB (a "medium packet"), it corresponds to a level of "medium" and a score sc(S) of "1"; if the data packet size S is greater than 10KB (a "large packet"), it corresponds to a level of "high" and a score sc(S) of "0". A higher score sc(S) of the data packet size S reflects that the communication status between the charging pile 101 and the control device 100 is: a higher transmission speed and a smaller transmission delay.

The re-transmission interval R is defined as: the time interval for re-transmitting the data packet D11 from the charging pile 101. A longer re-transmission interval R corresponds to a higher level and a lower score sc(R). For example, the re-transmission interval R is 10 seconds (a longer re-transmission interval R), which corresponds to the level "high" and the score sc(R) of "0"; the re-transmission interval R is 5 seconds (a medium re-transmission interval R), which corresponds to the level "medium" and the score sc(R) of "1"; the re-transmission interval R is 1 second (a shorter re-transmission interval R), which corresponds to the level "low" and the score sc(R) of "2". A higher score sc(R) of the re-transmission interval R reflects that the communication status between the charging pile 101 and the control device 100 is: a higher transmission speed and a smaller transmission delay.

The definition of transmission protocol C is: the category of transmission protocol between the charging pile 101 and the control device 100. In one example, the transmission protocol C is "TCP", which adopts a simpler encryption mechanism, so the processing speed of the data packet D11 of the charging pile 101 is faster, which corresponds to the score sc(C) of "2". In another example, the transmission protocol C is "UDP", which corresponds to the score sc(C) of "1". The higher score sc(C) of the transmission protocol C reflects that the communication status between the charging pile and the control device 100 is: higher transmission speed and smaller transmission delay
In the above descriptions, the data packet D11 of the charging pile 101 is taken as an example to explain the definition of the parameters of the communication condition and of the transmission setting, which can also be applied to the data packets D12 and D13 transmitted by the other charging stations 102 and 103 respectively. The communication condition analyzing unit 110 provides the parameters (network transmission delay D, bandwidth utilization U, charging station load L and data priority P) associated with the communication condition, which are analyzed from data packets D11-D13, to the optimal transmission calculating unit 130. On the other hand, the transmission configuration analyzing unit 120 provides the parameters (data packet size S, transmission protocol C and re-transmission interval R) of the transmission setting associated with the control device 100 and the data packets D11-D13, to the transmission optimization calculating unit 130.

The optimal transmission calculating unit 130 generates a score matrix M_sc for each of the data packets D11-D13 according to the network transmission delay D, the bandwidth utilization U, the charging station load L, the data priority P, the data packet size S, the transmission protocol C and the re-transmission interval R, and then generates a path of the optimal transmission configuration OPT for each of the data packets D11-D13 according to the score matrix M_sc.

The optimal transmission calculating unit 130 provides the optimal transmission configuration OPT of each of the data packets D11-D13 to the optimal transmission setting unit 140. Furthermore, the optimal transmission setting unit 140 calculates the priority scores of the data packets D11-D13 according to the path of the optimal transmission configuration OPT, and then sorts the data packets D11-D13 according to the priority scores.

FIG. 3A is a schematic diagram showing the optimal transmission calculating unit 130 calculates the optimal transmission configuration OPT of the data packet D11 of the charging pile 101. The optimal transmission calculating unit 130 establishes the score matrix M_sc according to the network transmission delay D and data priority P of the data packet D11, the bandwidth utilization U of the transmission between the charging pile 101 and the control device 100, the charging station load L of the charging station 10, the data packet size S and the re-transmission interval R of the data packet D11, and the transmission protocol C between the charging pile 101 and the control device 100, as shown in Table 3-1:

**Table 3-1**

| (score matrix M_sc associated with data packet D11 of the charging pile 101) | | | | |
|---|---|---|---|---|
| | network transmission delay D | bandwidth utilization U | charging station load L | data priority P |
| | score sc(D) =0/1/2 | score sc(U) =0/1/2 | score sc(L) =0/1/2 | score sc(P) =0/1/2 |
| data packet size S | m(1,1)= sc(S)+sc(D) | m(1,2)= sc(S)+sc(U) | m(1,3)= sc(S)+sc(L) | m(1,4)= sc(S)+sc(P) |
| score sc(S) =0/1/2 | | | | |
| transmission protocol C | m(2,1)= sc(C)+sc(D) | m(2,2)= sc(C)+sc(U) | m(2,3)= sc(C)+sc(L) | m(2,4)= sc(C)+sc(P) |
| score sc(C) =0/1/2 | | | | |
| re-transmission interval R | m(3,1)= sc(R)+sc(D) | m(3,2)= sc(R)+sc(U) | m(3,3)= sc(R)+sc(L) | m(3,4)= sc(R)+sc(P) |
| score sc(R) =0/1/2 | | | | |

The score matrix M_sc includes two dimensions. The first dimension (horizontal dimension) of the score matrix M_sc includes network transmission delay D, bandwidth utilization U, charging station load L and data priority P. The second dimension (vertical dimension) of the score matrix M_sc includes the data packet size S, the transmission protocol C and the re-transmission interval R.

The score matrix M_sc includes several matrix elements m(i,j). The value of a matrix element m(i,j) is equal to a sum of the score of the corresponding parameter of the first dimension and the score of the corresponding parameter of the second dimension. For example, the matrix elements m(1,1), m(1,2), m(1,3) and m(1,4) in the first row are respectively the sum of the score sc(S) of the data packet size S in the second dimension and the score sc(D) of the network transmission delay D, the score sc(U) of the bandwidth utilization U, the score sc(L) of the charging station load L and the score sc(P) of the data priority P in the first dimension. Similarly, the matrix elements m(2,1), m(2,2), m(2,3) and m(2,4) in the second row are respectively the sum of the score sc(C) of the transmission protocol C in the second dimension and the score sc(D) of the network transmission delay D, the score sc(U) of the bandwidth utilization U, the score sc(L) of the charging station load L and the score sc(P) of the data priority P in the first dimension. Furthermore, the matrix elements m(3,1), m(3,2), m(3,3) and m(3,4) in the third row are respectively the sum of the score sc(R) of the re-transmission interval R in the second dimension and the score sc(D) of the network transmission delay D, the score sc(U) of the bandwidth utilization U, the score sc(L) of the charging station load L and the score sc(P) of the data priority P in the first dimension.

The optimal transmission calculating unit 130 calculates the optimal transmission configuration OPT of the data packet D11 according to the values of the matrix elements m(i, j) of the score matrix M_sc. In the first dimension, network transmission delay D, bandwidth utilization U, charging station load L and data priority P are sorted according to their importance; that is, when considering the transmission efficiency of the communication of the charging management system 1000, network transmission delay D is the most important, followed by bandwidth utilization U, and then charging station load L and data priority P. On the other hand, in the second dimension, the data packet size S is the most important, followed by the transmission protocol C, and then the re-transmission interval R. Therefore, when calculating the optimal transmission configuration OPT of the data packet D11, the optimal transmission calculating unit 130 first considers the network transmission delay D of the first dimension and the data packet size S of the second dimension; therefore, the matrix element m(1,1) corresponding to the network transmission delay D and the data packet size S is used as the starting point of the path of the optimal transmission configuration OPT of the data packet D11.

The optimal transmission calculating unit 130 chooses to move rightward from the matrix element m(1,1) to the matrix element m(1,2) or downward to the matrix element m(2,1). The determination criterion for selecting rightward or downward movement is that, a numerical relationship between the matrix element m(1,2) and the matrix element m(2,1); it will move to the larger value between the matrix element m(1,2) and the matrix element m(2,1).

More specifically, further refer to Table 3-2, in which the score sc(D) of the network transmission delay D of the data packet D11 is "2", the score sc(U) of the bandwidth utilization U between the charging pile 101 and the control device 100 is "1", the score sc(L) of the charging station load L of the charging station 10 is "1", and the score sc(P) of the data priority P of the data packet D11 is "2". On the other hand, the score sc(S) of the data packet size S of the data packet D11 is "1", the score sc(C) of the transmission protocol C between the charging pile 101 and the control device 100 is "1", and the score sc(R) of the re-transmission interval R of the data packet D11 is "0".

**Table 3-2**

| (score matrix M_sc associated with data packet D11 of the charging pile 101) | | | | |
|---|---|---|---|---|
| | network transmission delay D | bandwidth utilization U | charging station load L | data priority P |
| | score sc(D) =2 | score sc(U) =1 | score sc(L) =1 | score sc(P) =2 |
| data packet size S | m(1,1)=3 | m(1,2)=2 | m(1,3)=2 | m(1,4)=3 |
| score sc(S) =1 | | | | |
| transmission protocol C | m(2,1)=3 | m(2,2)=2 | m(2,3)=2 | m(2,4)=3 |
| score sc(C) =1 | | | | |
| re-transmission interval R | m(3,1)=2 | m(3,2)=1 | m(3,3)=1 | m(3,4)=2 |
| score sc(R) =0 | | | | |

The value of the matrix element m(1,2) is the sum of the score sc(S) of "1" of the data packet size S and the score sc(U) of "1" of the bandwidth utilization U, so the value of the matrix element m(1,2) is "2". On the other hand, the value of the matrix element m(2,1) is the sum of the score sc(C) of "1" of the transmission protocol C and the score sc(D) of "2" of the network transmission delay D, so the value of the matrix element m(2,1) is "3". The value of the matrix element m(2,1) is greater than the value of the matrix element m(1,2), so the optimal transmission calculating unit 130 chooses to move downward from the matrix element m(1,1) to the matrix element m(2,1).

Next, the optimal transmission calculating unit 130 chooses to move rightward from the matrix element m(2,1) to the matrix element m(2,2), or to move downward to the matrix element m(3,1). The optimal transmission calculating unit 130 compares the values of the matrix element m(2,2) and the matrix element m(3,1); in the embodiment of FIG. 3A, the value "2" of the matrix element m(2,2) is the sum of the score sc(C) of "1" of the transmission protocol C and the score sc(U) of "1" of the bandwidth utilization U; on the other hand, the value "2" of the matrix element m(3,1) is the sum of the score sc(D) of "2" of the network transmission delay D and the score sc(R) of "0" of the re-transmission interval R. The values of the matrix element m(2,2) and the matrix element m(3,1) are equal and cannot be distinguished. When the values are equal, the optimal transmission calculating unit 130 moves rightward by default, thus moving to the matrix element m(2,2).

Similarly, the optimal transmission calculating unit 130 chooses to move rightward from the matrix element m(2,2) to the matrix element m(2,3), or to move downward to the matrix element m(3,2). In the embodiment of FIG. 3A, the value "2" of the matrix element m(2,3) is the sum of the score sc(C) of "1" of the transmission protocol C and the score sc(L) of "1" of the charging station load L; on the other hand, the value "1" of the matrix element m(3,2) is the sum of the score sc(U) of "1" of the bandwidth utilization U and the score sc(R) of "0" of the re-transmission interval R. The value of the matrix element m(2,3) is greater than the value of the matrix element m(3,1), so the optimal transmission calculating unit 130 chooses to move rightward to the matrix element m(2,3).

Next, the optimal transmission calculating unit 130 chooses to move rightward from the matrix element m(2,3) to the matrix element m(2,4), or to move downward to the matrix element m(3,3). In the embodiment of FIG. 3A, the value "3" of the matrix element m(2,4) is the sum of the score sc(C) of "1" of the transmission protocol C and the score sc(P) of "2" of the data priority P; on the other hand, the value "1" of the matrix element m(3,3) is the sum of the score sc(L) of "1" of the charging station load L and the score sc(R) of "0" of the re-transmission interval R. The value of the matrix element m(2,4) is greater than the value of the matrix element m(3,3), so the optimal transmission calculating unit 130 chooses to move rightward to the matrix element m(2,4).

The matrix element m(2,4) has reached the right boundary of the score matrix M_sc, and thus the matrix element m(2,4) serves as the end point of the path ph1 of the optimal transmission configuration OPT of the data packet D11. In summary, the starting point of the path ph1 of the optimal transmission configuration OPT of the data packet D11 is the matrix element m(1,1), and the end point is the matrix element m(2,4); the matrix element m(1,1) is located at the upper left corner of the score matrix M_sc, and the matrix element m(2,4) is located at the right boundary of the score matrix M_sc. All nodes included in the path ph1 of the optimal transmission configuration OPT of the data packet D11 are shown as the following order: matrix element m(1,1), matrix element m(2,1), matrix element m(2,2), matrix element m(2,3), matrix element m(2,4).

Then, the optimal transmission setting unit 140 calculates the priority score of the data packet D11 according to the path ph1 of the optimal transmission configuration OPT of the data packet D11. In another embodiment, the optimal transmission setting unit 140 sums up the values corresponding to all nodes included in the path ph1, so as to obtain the priority score of the data packet D11. In other words, the values "3", "3", "2", "2" and "3" corresponding to the matrix element m(1,1), the matrix element m(2,1), the matrix element m(2,2), the matrix element m(2,3) and the matrix element m(2,4) included in the path ph1 are summed up to obtain the priority score "13" of the data packet D11.

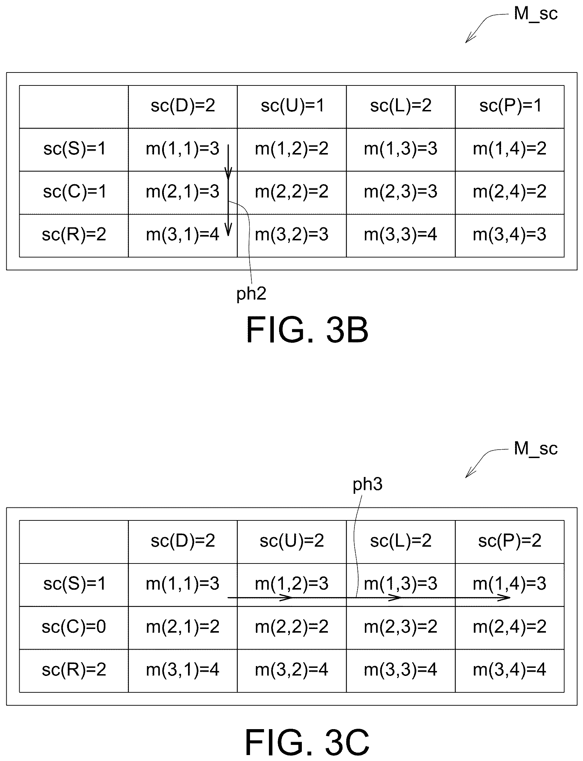

On the other hand, please refer to FIG. 3B, which is a schematic diagram of the optimal transmission calculating unit 130 calculates the optimal transmission configuration OPT of the data packet D12 of the charging pile 102. The embodiment of FIG. 3B corresponds to Table 4, wherein the score sc(D) of the network transmission delay D of the data packet D12 is "2", the score sc(U) of the bandwidth utilization U between the charging pile 102 and the control device 100 is "1", the score sc(L) of the charging station load L of the charging station 10 is "2", and the score sc(P) of the data priority P of the data packet D12 is "1". On the other hand, the score sc(S) of the data packet size S of the data packet D12 is "1", the score sc(C) of the transmission protocol C between the charging pile 102 and the control device 100 is "1", and the score sc(R) of the re-transmission interval R of the data packet D12 is "2".

**Table 4**

| (score matrix M_sc associated with data packet D12 of the charging pile 102) | | | | |
|---|---|---|---|---|
| | network transmission delay D | bandwidth utilization U | charging station load L | data priority P |
| | score sc(D) =2 | score sc(U) =1 | score sc(L) =2 | score sc(P) =1 |
| data packet size S | m(1,1)=3 | m(1,2)=2 | m(1,3)=3 | m(1,4)=2 |
| score sc(S) =1 | | | | |
| transmission protocol C | m(2,1)=3 | m(2,2)=2 | m(2,3)=3 | m(2,4)=2 |
| score sc(C) =1 | | | | |
| re-transmission interval R | m(3,1)=4 | m(3,2)=3 | m(3,3)=4 | m(3,4)=3 |
| score sc(R) =2 | | | | |

The optimal transmission calculating unit 130 uses the matrix element m(1,1) located at the upper left corner of the score matrix M_sc as the starting point of the path ph2 of the optimal transmission configuration OPT of the data packet D12. Depending on the magnitude relationship between the matrix element m(1,2) and the matrix element m(2,1), choosing to move right to the matrix element m(1,2) or move downward to the matrix element m(2,1). In this embodiment, the value "3" of the matrix element m(2,1) is greater than the value "2" of the matrix element m(1,2); therefore, the optimal transmission calculating unit 130 chooses to move down to the matrix element m(2,1).

Next, the optimal transmission calculating unit 130 chooses to move rightward from the matrix element m(2,1) to the matrix element m(2,2), or to move downward to the matrix element m(3,1). In this embodiment, the value "2" of the matrix element m(2,2) is smaller than the value "4" of the matrix element m(3,1); therefore, the optimal transmission calculating unit 130 chooses to move down to the matrix element m(3,1).

The matrix element m(3,1) has reached the lower boundary of the score matrix M_sc, so the matrix element m(3,1) serves as the end point of the path ph2 of the optimal transmission configuration OPT for the data packet D12; all nodes included in the path ph2 are shown in following order: the matrix element m(1,1), the matrix element m(2,1) and the matrix element m(3,1).

The optimal transmission setting unit 140 sums up the values "3", "3" and "4" corresponding to the matrix element m(1,1), the matrix element m(2,1) and the matrix element m(3,1) included in the path ph2, so as to obtain the priority score of "10" for the data packet D12.

Next, please refer to FIG. 3C, which is a schematic diagram of the optimal transmission configuration OPT of the data packet D13 of the charging pile 103 calculated by the optimal transmission calculating unit 130. The embodiment of FIG. 3C corresponds to Table 5, wherein the score sc(D) of the network transmission delay D of the data packet D13 is "2", the score sc(U) of the bandwidth utilization U between the charging pile 102 and the control device 100 is "1", the score sc(L) of the charging station load L of the charging station 10 is "2", and the score sc(P) of the data priority P of the data packet D13 is "1". On the other hand, the score sc(S) of the data packet size S of the data packet D13 is "1", the score sc(C) of the transmission protocol C between the charging pile 102 and the control device 100 is "1", and the score sc(R) of the re-transmission interval R of the data packet D13 is "2".

**Table 5**

| (score matrix M_sc associated with data packet D13 of the charging pile 103) | | | | |
|---|---|---|---|---|
| | network transmission delay D | bandwidth utilization U | charging station load L | data priority P |
| | score sc(D) =2 | score sc(U) =2 | score sc(L) =2 | score sc(P) =2 |
| data packet size S | m(1,1)=3 | m(1,2)=3 | m(1,3)=3 | m(1,4)=3 |
| score sc(S) =1 | | | | |
| transmission protocol C | m(2,1)=2 | m(2,2)=2 | m(2,3)=2 | m(2,4)=2 |
| score sc(C) =0 | | | | |
| re-transmission interval R | m(3,1)=4 | m(3,2)=4 | m(3,3)=4 | m(3,4)=4 |
| score sc(R) =2 | | | | |

The optimal transmission calculating unit 130 uses the matrix element m(1,1) located at the upper left corner of the score matrix M_sc of the data packet D13 as the starting point of the path ph3 of the optimal transmission configuration OPT of the data packet D13; and according to the magnitude relationship between the matrix element m(1,2) and the matrix element m(2,1) (which are adjacent to the matrix element m(1,1) of the starting point), the path ph3 is extended to the right to the matrix element m(1,2).

Similarly, the optimal transmission calculating unit 130 extends the path ph3 to the right to reach the matrix element m(1,3) according to the magnitude relationship between the values of the matrix element m(1,3) and the matrix element m(2,2) (which are adjacent to the matrix element m(1,2)). In the same manner, the optimal transmission calculating unit 130 extends the path ph3 from the matrix element m(1,3) to the right to the matrix element m(1,4).

The matrix element m(1,4) has reached the right boundary of the score matrix M_sc, and thus the matrix element m(1,4) serves as the end point of the path ph3 of the optimal transmission configuration OPT of the data packet D13. Accordingly, all nodes included in the path ph3 are shown in following order: matrix element m(1,1), matrix element m(1,2), matrix element m(1,3) and matrix element m(1,4).

The optimal transmission setting unit 140 sums up the values "3", "3", "3" and "3" corresponding to the matrix element m(1,1), the matrix element m(1,2), the matrix element m(1,3) and the matrix element m(1,4) of the path ph3 of the optimal transmission configuration OPT of the data packet D13, so as to obtain the priority score "12" of the data packet D13.

In the above-mentioned embodiments of FIGS. 3A, 3B and 3C, the optimal transmission setting unit 140 calculates the priority scores "13", "10" and "12" of the data packets D11, D12 and D13, respectively. Furthermore, the optimal transmission setting unit 140 sorts the data packets D11, D12 and D13 according to the priority scores "13", "10" and "12". In one embodiment, a higher priority score indicates a higher transmission priority, for which the data packet D11 has the highest transmission priority and the data packet D12 has the lowest transmission priority. Therefore, the optimal transmission setting unit 140 sorts them into an order of: data packet D11, data packet D13 and then data packet D12. According to the above sorting result, the control device 100 transmits the data packet D11, the data packet D13 and the data packet D12 to the remote base station 500, and further transmits them to the server 600 in the backend (as shown in FIG. 1A).

In another embodiment, the control device 300 of another charging station 30 also executes the same mechanism: a score matrix M_sc is generated based on the communication condition and transmission setting associated with the data packets D31, D32 and D33 of the charging piles 301, 302 and 303 (the transmission setting is also associated with the control device 300 itself), and the paths of the optimal transmission configurations OPT of the data packets D31-D33 are generated based on the score matrix M_sc, and then the priority scores of the data packets D31-D33 are calculated. Furthermore, the data packets D31-D33 are sorted according to the priority scores. For example, data packet D33 has the highest priority score, followed by data packet D31, and then data packet D32. Accordingly, the control device 300 sequentially transmits the data packet D33, the data packet D31, and the data packet D32 to the remote base station 500 by order, and further transmits them to the server 600 in the backend.

In other embodiments (not shown), the order of the parameters of the communication condition and the transmission setting of the score matrix M_sc can be adjusted, with each other. For example, the order of the parameters of the first dimension can be adjusted as follows: network transmission delay D, data priority P, bandwidth utilization U, and charging station load L. Furthermore, the order of the parameters of the second dimension can be adjusted as follows: transmission protocol C, data packet size S and re-transmission interval R.

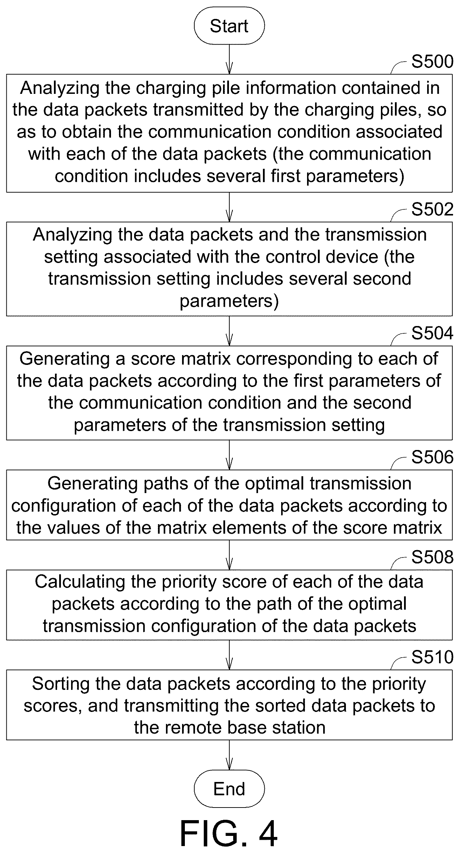

Please refer to FIG. 4, which is a flow chart of an optimal transmission method according to an embodiment of the present disclosure. The optimal transmission method of FIG. 4 may be applied to the charging management system 1000a of FIG. 1A, and the control device 100 of the charging station 10 and the charging piles 101-103 of FIG. 1A are taken as examples to describe the optimal transmission method.

The optimal transmission method starts at step S500: employing the communication condition analyzing unit 110 of the control device 100 to analyze the charging pile information contained in the data packets D11-D13 transmitted by the charging piles 101-103, so as to obtain the communication condition associated with each of the data packets D11-D13. The communication condition includes several first parameters: network transmission delay D, bandwidth utilization U, charging station load L and data priority P.

Next, step S502 is executed: employing the transmission setting analyzing unit 120 of the control device 100 to analyze the data packets D11-D13 and the transmission setting associated with the control device 100. The transmission setting includes several second parameters: data packet size S, transmission protocol C and re-transmission interval R.

Next, step S504 is executed: employing the optimal transmission calculating unit 130 of the control device 100 to generate a score matrix M_sc corresponding to each of the data packets D11 to D13 according to the first parameters of the communication condition and the second parameters of the transmission setting.

Next, step S506 is executed: employing the optimal transmission setting unit 140 of the control device 100 to generate the path of the optimal transmission configuration OPT of each of the data packets D11-D13, according to the values of the matrix elements of the score matrix M_sc. The score matrix M_sc has a first dimension and a second dimension. The first dimension corresponds to the first parameters and the second dimension corresponds to the second parameters. The value of the matrix element is equal to the sum of the score of the first parameter corresponding to the first dimension and the score of the second parameter corresponding to the second dimension.

Next, step S508 is executed: employing the optimal transmission setting unit 140 to calculate the priority score of each of the data packets D11-D13 according to the path of the optimal transmission configuration OPT of each of the data packets D11 to D13. The values of the matrix elements on the path of the optimal transmission configuration OPT are summed up to obtain the priority score of a corresponding one of the data packets D11-D13.

Next, step S510 is executed: employing the optimal transmission setting unit 140 to sort the data packets D11-D13 according to the priority scores, and employing the control device 100 to transmit the sorted data packets D11-D13 to the remote base station 500.

In summary, according to the various embodiments of the present disclosure, the control devices 100-300 are capable of generating optimal transmission configurations OPT for the charging piles 101-103, 201-203 and 301-303 of the charging stations 10-30, sorting the data packets D11-D13, D21-D23 and D31-D33 transmitted by the charging piles 101-103, 201-203 and 301-303 respectively, and transmitting the sorted data packets D11-D13, D21-D23 and D31-D33 to the remote base station 500 and the server 600 in the back-end. Accordingly, the transmission efficiency among the charging piles 101-103, 201-203 and 301-303, the control devices 100-300 and the remote base station 500 can be greatly improved, so as to avoid packet loss or packet delay in data packet transmission.

In addition, the control devices 100-300 can further analyze the requirement and status of each of the vehicles 11-33 and adjust the charging resources of the charging piles 101-303 accordingly. For example, the control device 100 can analyze the charging requirement, battery status, and driver behavior of the vehicles 11, 12, and 13, and adjust the charging resources of the charging piles 101, 102, and 103 accordingly, thereby improving the utilization efficiency of overall charging resource of the charging station 10.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A control device (100) for a charging station (10), wherein the charging station (10) comprises a plurality of charging piles (101-103) communicatively connected to the control device (100), and each of the charging piles (101-103) charges at least one vehicle (11-13), the control device (100) comprising:
a communication condition analyzing unit (110), is configured to analyze a charging pile information contained in a plurality of data packets (D11-D13) transmitted by the charging piles (101-103), so as to obtain a communication condition associated with the data packets (D11-D13), wherein the communication condition comprises a plurality of first parameters;
a transmission setting analyzing unit (120), is configured to analyze a transmission setting associated with the data packets (D11-D13) and the control device (100), wherein the transmission setting comprises a plurality of second parameters;
an optimal transmission calculating unit (130), communicatively connected to the communication condition analyzing unit (110) and the transmission setting analyzing unit (120), and configured to generate a path of an optimal transmission configuration for each of the data packets (D11-D13) according to the first parameters and the second parameters; and
an optimal transmission setting unit (140), communicatively connected to the optimal transmission calculating unit (130), and configured to calculate a plurality of priority scores corresponding to the data packets (D11-D13) according to the path of the optimal transmission configuration of each of the data packets (D11-D13), and sort the data packets (D11-D13) according to the priority scores,
wherein, the sorted data packets (D11-D13) are transmitted by the control device (100).

2. The control device (100) of claim 1, wherein the optimal transmission calculating unit (130) generates a plurality of score matrices corresponding to the data packets (D11-D13) according to the first parameters and the second parameters, and generates the path of the optimal transmission configuration for each of the data packets (D11-D13) according to values of a plurality of matrix elements in each of the score matrices.

3. The control device (100) of claim 1, wherein the first parameters comprise a network transmission delay, a bandwidth utilization, a charging station (10) load and a data priority, and the second parameters comprise a data packet size, a transmission protocol and a re-transmission interval.

4. The control device (100) of claim 2, wherein each of the score matrices has a first dimension and a second dimension, the first dimension corresponds to the first parameters, and the second dimension corresponds to the second parameters.

5. The control device (100) of claim 4, wherein the value of each of the matrix element is equal to a sum of a score of the first parameter corresponding to the first dimension and a score of the second parameter corresponding to the second dimension.

6. The control device (100) of claim 2, wherein the optimal transmission setting unit (140) sums up the values of the matrix elements on the path of the optimal transmission configuration, so as to obtain a priority score of a corresponding one of the data packets (D11-D13).

7. The control device (100) of claim 2, wherein the optimal transmission calculating unit (130) generates the path of the optimal transmission configuration according to a magnitude relationship of the values of the matrix elements.

8. An optimal transmission method for a charging station (10), wherein the charging station (10) comprises a control device (100) and a plurality of charging piles (101-103) communicatively connected to the control device (100), and each of the charging piles (101-103) charges at least one vehicle (11-13), the optimal transmission method comprising:
analyzing a charging pile information contained in a plurality of data packets (D11-D13) transmitted by the charging piles (101-103) to obtain a communication condition associated with the data packets (D11-D13), wherein the communication condition comprises a plurality of first parameters;
analyzing each of the data packets (D11-D13) and a transmission setting associated with the control device (100), wherein the transmission setting comprises a plurality of second parameters;
generating a path of an optimal transmission configuration for each of the data packets (D11-D13) according to the first parameters and the second parameters;
calculating a plurality of priority scores corresponding to the data packets (D11-D13) according to the path of the optimal transmission configuration of each of the data packets (D11-D13);
sorting the data packets (D11-D13) according to the priority scores; and
transmitting the sorted data packets (D11-D13) by the control device (100).

9. The optimal transmission method of claim 8, wherein the step of generating the path of the optimal transmission configuration according to the first parameters and the second parameters comprising:
generating a plurality of score matrices corresponding to the data packets (D11-D13) according to the first parameters and the second parameters; and
generating the path of the optimal transmission configuration of each of the data packets (D11-D13) according to values of a plurality of matrix elements in each of the score matrices.

10. The optimal transmission method of claim 8, wherein the first parameters comprise a network transmission delay, a bandwidth utilization, a charging station (10) load and a data priority, and the second parameters comprise a data packet size, a transmission protocol and a re-transmission interval.

11. The optimal transmission method of claim 9, wherein each of the score matrices has a first dimension and a second dimension, the first dimension corresponds to the first parameters, and the second dimension corresponds to the second parameters.

12. The optimal transmission method of claim 11, wherein the value of each of the matrix element is equal to a sum of a score of the first parameter corresponding to the first dimension and a score of the second parameter corresponding to the second dimension.

13. The optimal transmission method of claim 9, wherein the step of calculating the priority scores comprising:
summing up the values of the matrix elements on the path of the optimal transmission configuration, so as to obtain a priority score of a corresponding one of the data packets (D11-D13).

14. The optimal transmission method of claim 9, wherein the path of the optimal transmission configuration is generated according to a magnitude relationship of the values of the matrix elements.

15. A non-transitory computer-readable storage medium, comprising a plurality of instructions, the instructions cause a controller, a computing device or a computer to execute the optimal transmission method for a charging station (10) of claim 8.
